# EUROPEAN PATENT APPLICATION

(11) **EP 1 199 878 A2**
(43) Date of publication of application: **24.04.2002**
(21) Application number: 01203795.8
(22) Date of filing: 08.10.2001
(51) Int. Cl.: H04N 1/00

(54) **A method of authorizing the reproduction of copyrighted images**

(30) Priority: 18.10.2000 US 691090
(71) Applicant: EASTMAN KODAK COMPANY, Rochester, New York 14650 (US)
(72) Inventor: Cok, Ronald S., c/o Eastman Kodak Company, Rochester, New York 14650-2201 (US); Rommel, Richard A., c/o Eastman Kodak Company, Rochester, New York 14650-2201 (US); Hadley, Mary A., c/o Eastman Kodak Company, Rochester, New York 14650-2201 (US)
(74) Representative: Nunney, Ronald Frederick Adolphe

(57) **Abstract**

A method of authorizing reproduction of copyrighted images, includes the steps of: steganographically embedding information relating to copy authorization within an image; detecting the embedded information; and reproducing the image in response to the detected embedded information.

## Description

The present invention relates to a method for the reproduction of copyrighted images incorporating steganographic information and the subsequent reimbursement of the image copyright owners.

Professional photographers traditionally charge for their services by requiring payment for the prints provided to customers. The photographers maintain copyright ownership of the prints and the customers are enjoined from creating copies of the prints without permission from the copyright holder. Additional prints must be purchased from the copyright owner, typically the photographer. However, the ready availability of digital imaging devices has made it relatively easy to create high-quality copies of copyrighted images without recourse or compensation to the copyright owners. In particular, color copiers, scanners, and home computers provide the means to create such copies.

Digital imaging equipment at retail, for example the Kodak Picture Maker, can also be used to create very high-quality image copies. Current practice requires clerks to prevent such copying and also requires customers to indicate assent to a copyright clause when using the retail digital imaging equipment to create copies. Other methods are also used, for example special photographic paper incorporating special dyes that are invisible to humans but that can be detected by scanners. Once detected by a scanner, a suitably programmed digital copier can interrupt the copying process.

Steganographic techniques can be used in a similar way. By embedding information in a hard copy image, a properly equipped digital imaging system can extract information from the image. This information can indicate whether or not an image should be copied and interrupt the copying process as appropriate. U.S. Patent No. 5,822,436 issued October 13, 1998 to Rhoads entitled *Photographic Products and Methods Employing Embedded Information* describes such a process. Other techniques, such as pre-exposing photographic paper can also support this process.

Techniques also exist to locate copyrighted images and report their location to copyright owners. Such techniques rely on network-enabled software tools that access images over a network and analyze any images found. If images are located that contain the appropriate steganographic information, their location is reported. U.S. Patent No. 5,862,260 issued January 19, 1999 to Rhoads entitled *Methods for Surveying Dissemination of Proprietary Empirical Data* discloses a technique for steganographically hiding the identity of a proprietor in a proprietary data set, automatically surveying data sets available on the internet for the proprietors identity, and reporting the results back to the proprietor so that appropriate steps can be made to remove the proprietary material, or compensate the proprietor.

Embedding information into imagery to control or track reproduction of the images has been known and in use for many years. For example, the concept of interrupting the operation or use of a kiosk based on the detection of an overprinted signal was disclosed in June of 1975 pp59-60 of the IBM Technical Disclosure Bulletin document # 75C 01201.

These techniques are effective for establishing ownership of copyrighted imagery and for preventing commercial copying. However, they do not meet the basic need for consumers to obtain copies of copyrighted images in a convenient and legal way. Nor do these techniques make it possible for copyright owners to receive payment for legitimate copies of their images in an expedient fashion. There is a need, therefore, for a suitable method authorizing the legitimate reproduction of copyrighted images.

This need is met according to the present invention by a method of authorizing reproduction of copyrighted images, that includes the steps of: steganographically embedding information relating to copy authorization within an image; detecting the embedded information; and reproducing the image in response to the detected embedded information.
Fig. 1 is an illustrated flow diagram of the present invention at a professional studio and printing facility;
Fig. 2 is an illustrated flow diagram of the present invention at a retail location; and
Fig. 3 is an illustrated flow diagram of the present invention with indications of the preferred communications paths.

The foregoing problems associated with the reproduction of copyrighted images may be overcome by first embedding steganographic information into a copyrighted image, registering the information with a registry, providing copies of the image to a customer, receiving payment for the copy, and reimbursing the copyright owner for the copy using the embedded information to direct the reimbursement.

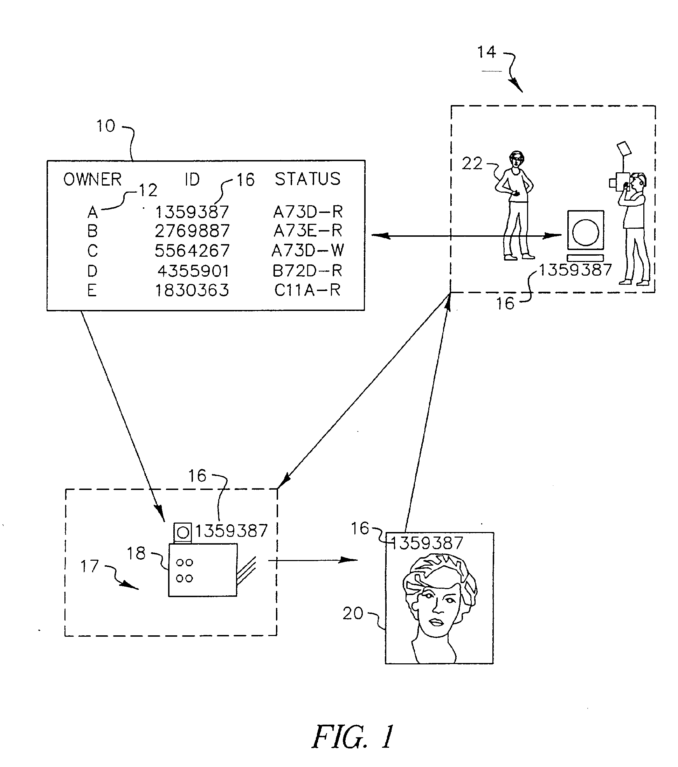

The implementation of the method requires a system for the ready distribution and collection of information about copyright ownership and image use. In a preferred embodiment, the method works as illustrated in Fig. 1. A image copyright owners' registry **10** is first created. The registry is a service business that supplies and maintains a list of image copyright owner identification codes and copy authorizations **12**. These identifications can be in any suitable digital format and can be steganographically embedded in an image. One method of embedding data useful with the present invention is shown in U.S. Patent No. 6,044,182 issued March 28, 2000 to Daly et al. entitled *Method for Embedding Digital Information in an Image*. It discloses a method of embedding digital data in a source image that includes the steps of: a) generating a multi-level data image representing the digital data; b) convolving the multilevel data image with an encoding carrier image to produce a frequency dispersed data image; and c) adding the frequency dispersed data image to the source image to produce a source image containing embedded data. The data is recovered from the image by: a) cross correlating the source image containing embedded data with a decoding carrier image to recover the data image; and b) extracting the digital data from the recovered data image.

A professional photographer **14** or other creative imaging business then registers with the registry and obtains an identification code **16**. The identification codes are provided to properly enabled digital imaging workstations at various suitable sites. The professional photographer **14** or other creative imaging business creates an image or selects an existing image that is to be provided or sold in hard-copy form (for example, a print) to a customer. Rather than simply reproducing the image using conventional printing techniques, the image is first digitized. (If the image is created using a digital apparatus - such as a digital camera - or exists in digital form, this step is not needed.) The digitization can readily be done using a scanner either by the photographer or at a professional print service **17**.

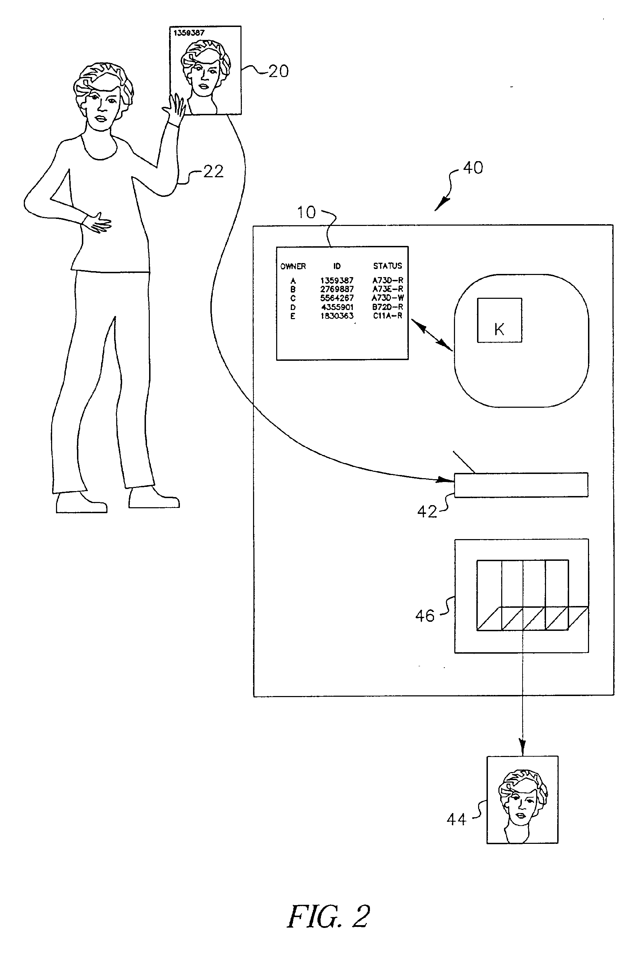

Once digitized, the image is then processed **18** to steganographically embed the copyright owner's registered identification. The resulting image **20** is printed and provided to the customer **22**. The customer then enjoys the use of the image. If the customer subsequently desires another copy of the image but does not find it convenient to request a copy directly from the copyright owner, he or she proceeds to a reproduction site (see Fig. 2) where a digital imaging device **40** with access to the copyright owners' registry **10** is located. The customer requests or proceeds to make a copy of the print and may be required to identify him or herself. The print is scanned digitally using a scanner **42** and processed to extract the steganographically embedded information. The embedded information is used to access the registry information. If copying is authorized, the print **44** is made with a printer **46** and the customer pays for the copy. Note that the steganographic information is reproduced within the new print copy, possibly with some new data or modifications. A record of the sale is maintained by the digital imaging workstation and communicated to the registry service. The registry service bills the retailer who received the customer payment and provides payment to the copyright owner. This payment can be set according to the type or size of the copy made and appropriate reimbursement provided.

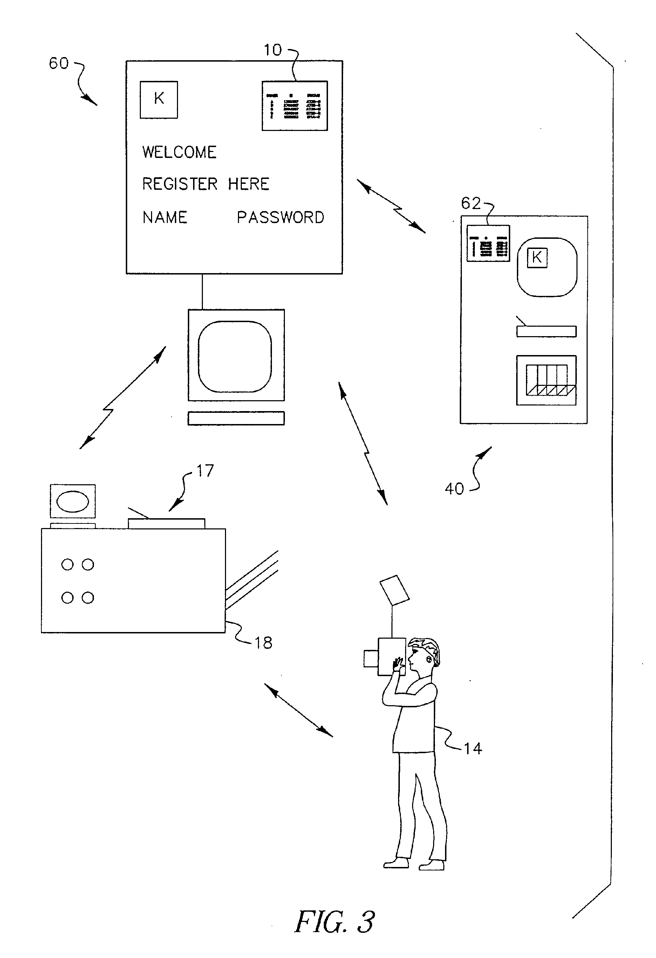

In a preferred implementation illustrated in Fig. 3, the registry **10** is created through an automated internet accessible web site **60** that allows a copyright owner or photographer **14** to register their business details and receive an identification. Collaborating printing services **17** may also receive a copy of the identification so that the copyright owner or photographer is not required to create their own prints. The printing services are provided with the tools necessary to digitize an image, to process the image to embed the steganographic identification, and to print the result. The digital imaging workstations **40** can access the registry information through a telecommunications link or through a local copy **62** of the information. If a local copy is provided, it can be updated periodically, preferably through a telecommunications link. Likewise, the record of print sales made by the digital imaging workstation are preferably communicated via a telecommunication link. Suitable telecommunication links, such as dial-up modems on telephone lines or internet connections of various sorts are in common use today as are web sites, registration procedures, and database requirements.

The registered steganographic information can include more than a simple identification of a copyright owner. For example, the information can include customer data, image identification data, or pricing data which the digital imaging workstation can utilize to provide a variety of more customized services. Specific customer data can be compared to the alleged owner of the hard-copy print or used to enable copying by specific customers and not by others. Such a case might obtain if, for example, a wedding couple arranged to make copies of their wedding pictures for friends and relatives but the friends and relatives were not permitted to make copies of their prints. In other cases, a preferred customer might pay extra for the ability to make copies of their purchased prints where others might not. Image specific identification data can be used to identify a specific image, enabling copying of one class of images but not others. Pricing data can be included to affect the price charged to the copying customer. Alternatively, information that is not print copy specific (customer and pricing) might be maintained in the registry and when a copyright owner and or image print is identified, the registry is queried as to what action to take.

Another interesting capability of the present invention is the ability to restrict print copy generations. A print might be enabled with a code representing a "generation value". An original print might have a value of zero, a copy of the original a value of one, a copy of the copy a value of two, and so on. As each print copy is made, the generation value is incremented and written steganographically into the print. The technique does not restrict the number of copies in a generation, but does restrict the number of generations.

The availability of a registry also enables new services. Just as the steganographic information within a print can be updated, so can the registry. If a digital imaging workstation is provided with a telecommunications capability that is always available, each copy can be immediately reported to the central registry service and the registry information updated. Thus, once a print is identified, the number of copies made can be restricted or extended as desired by the copyright owner. Moreover, other changes in registry information and instructions can be made as desired over time. If the digital imaging workstation does not have a continuously available telecommunications link, the update is done periodically and no changes in control parameters are possible between updates.

The telecommunications link to the digital imaging workstations, to copyright owners, and if desired to the print services, enables a completely automated mechanism for managing billing and payments as well as changes in copyright controls and access. This reduces costs and enables a service which is otherwise impractical. Moreover, the present invention provides a method to meet the needs of copyright owners, print owners, and reproduction service managers in a convenient and efficient manner.

## Claims

1. A method of authorizing reproduction of copyrighted images, comprising the steps of:
a) steganographically embedding information relating to copy authorization within an image;
b) detecting the embedded information; and
c) reproducing the image in response to the detected embedded information.

2. The method claimed in claim 1, further comprising the step of compensating a copyright holder when the image is reproduced.

3. The method of authorizing reproduction of copyrighted images claimed in claim 1, further comprising the step of:
d) registering reproduction authorization with a registry that can be accessed with the embedded information to determine copy authorization.

4. The method of authorizing reproduction of copyrighted images claimed in claim 3, further comprising the step of:
e) receiving payment for the copy.

5. The method claimed in claim 1, wherein the step of detecting includes scanning a print of the copyrighted image at a reproduction station.

6. The method claimed in claim 1, wherein the embedded information further includes information selected from the group of an identification of the printed image, a customer identification, and an identification of a reproduced copy of the printed image.

7. The method claimed in claim 1, wherein the embedded information is reproduced and embedded within the reproduced image.

8. The method claimed in claim 1, wherein the embedded information is modified and embedded within the reproduced image.

9. The method claimed in claim 8, wherein the embedded information modified is the copy generation of the reproduced image, is incremented and is modified and embedded within the copy.

10. A copy authorization service, comprising:
a) means for steganographically embedding information relating to copy authorization within an image;
b) means for detecting the embedded information; and
c) means for reproducing the image in response to the detected embedded information; and
d) a registry for registering reproduction authorization that can be accessed with the embedded information to determine copy authorization.
